# EUROPÄISCHE PATENTSCHRIFT

(11) **EP 2 683 459 B1**
(45) Veröffentlichungstag und Bekanntmachung des Hinweises auf die Patenterteilung: **13.03.2019**
(21) Anmeldenummer: 12700314.3
(22) Anmeldetag: 12.01.2012
(51) Int. Cl.: B01D 29/52

(54) **FILTERVORRICHTUNG**
FILTERING DEVICE
DISPOSITIF DE FILTRATION

(30) Priorität: 05.03.2011 DE 102011013186
(43) Veröffentlichungstag der Anmeldung: 15.01.2014
(73) Patentinhaber: Hydac Filtertechnik GmbH, 66280 Sulzbach/Saar (DE)
(72) Erfinder: SAKRASCHINSKY, Michael, 66386 St. Ingbert (DE)
(74) Vertreter: Bartels und Partner, Patentanwälte
(86) Internationale Anmeldenummer: PCT/EP2012/000119
(87) Internationale Veröffentlichungsnummer: WO 2012/119674

(56) Entgegenhaltungen:
- EP-B1- 0 613 394
- WO-A2-2010/004315
- DE-A1- 19 711 589
- DE-C1- 4 338 100
- DE-U1- 20 112 561
- US-A- 3 151 962
- US-A- 4 702 754
- US-A1- 2009 321 339

## Beschreibung

Die Erfindung betrifft eine Filtervorrichtung mit den Merkmalen im Oberbegriff von Anspruch 1.

Filtervorrichtungen dieser Art werden häufig bei technischen Anlagen für die Filterung von Verfahrensflüssigkeiten, Druckflüssigkeiten, wie Hydraulikölen, Kühlschmiermitteln, zur Aufbereitung flüssiger Medien und dergleichen eingesetzt. In vielen Fällen steht bei Anlagen, bei denen derartige Filtervorrichtungen zum Einsatz kommen, nur ein begrenzter Nutzraum für Einbau oder Anbau der Filtervorrichtung zur Verfügung. Um entsprechend große Volumenströme filtrieren zu können, ist jedoch eine ausreichende Größe der von der Filtervorrichtung zur Verfügung gestellten Filterfläche erforderlich. Im Hinblick auf dieses Erfordernis sind bei einer bekannten Filtervorrichtung der oben genannten Art, wie sie beispielhaft in DE 10 2004 026 862 A1 aufgezeigt ist, Filterelemente vorgesehen, deren von der Kreiszylinderform abweichender Körper einen Querschnitt in Form eines Reuleaux-Gleichdicks besitzt. Diese Form des Gleichdicks ermöglicht es, in einem gegebenen Einbauraum eine größere Filterfläche unterzubringen als dies bei Vorrichtungen mit kreiszylindrischen oder quaderförmigen Filterelementen möglich ist.

Die US 3 151 962 offenbart eine Filtervorrichtung mit mehreren Filterelementen, deren Körper jeweils eine Längsachse definieren, wobei die Filterelemente in einem Gehäuse mit zueinander parallel verlaufenden Längsachsen nebeneinander angeordnet sind und die Körper mindestens eines Teils der Filterelemente auf zumindest einem Teil ihrer Länge eine von einem Kreiszylinder abweichende Form besitzen, wobei die Filterelemente mit von der Kreiszylinderform abweichenden Körpern einen Querschnitt besitzen, dessen Größe sich von einem Ende zum anderen Ende hin zumindest teilweise ändert, wobei diese Filterelemente im Gehäuse derart orientiert sind, dass bei benachbarten Filterelementen die Bereiche größeren Querschnitts den Bereichen kleineren Querschnitts zugeordnet sind, wobei Filterelemente in Form konischer Filterkerzen mit einander entgegengesetzter Konizität zueinander benachbart angeordnet sind, wobei die Filterkerzen in dichter Packung nebeneinander gruppiert sind und wobei eine Reihenanordnung vorgesehen ist, bei der in jeweils einer Reihe die schlankeren Enden der Filterkerzen einer Bodenplatte zugewandt sind und in der jeweils benachbarten Reihe die Filterkerzen mit dem dickeren Ende der Bodenplatte zugewandt sind. Das Fluid strömt dabei aus einer Filterkerze direkt in eine benachbarte Filterkerze über, so dass das Fluid an den breiteren Enden der Filterkerzen sowohl ein- als auch austritt.

In der DE 201 12 561 U1 sind mehrere Filterelemente konzentrisch zueinander angeordnet. Die einzelnen Filterelemente erweitern und verjüngen sich konisch in mehreren Abschnitten, wobei ein zentral angeordnetes Filterelement sich umgekehrt zu den radial weiter außen angeordneten Filterelementen konisch verjüngt und erweitert.

Weitere Filtervorrichtungen gehen aus der US 4 702 754, der DE 43 38 100 C1, der US 2009/0321339 A1, der DE 197 11 589 A1, der EP 0 613 394 B1 und der WO 2010/004315 A2 hervor.

Ausgehend von diesem Stand der Technik stellt sich die Erfindung die Aufgabe, eine Filtervorrichtung zur Verfügung zu stellen, die es ermöglicht, das Verhältnis zwischen gegebenem Einbauraum und erreichbarer Filterfläche noch weiter zu verbessern.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 ist diese Aufgabe erfindungsgemäß dadurch gelöst, dass die Filterkerzen aufeinanderfolgender Reihen jeweils so zueinander versetzt sind, dass die Filterkerzen benachbarter Reihen jeweils auf Lücke stehen, und dass die Bodenplatte für jede Filterkerze eine Fluidöffnung aufweist.

Die Filterelemente mit von der Kreiszylinderform abweichenden Körpern besitzen einen Querschnitt, dessen Größe sich von einem Ende zum anderen Ende hin zumindest teilweise ändert, und dass diese Filterelemente im Gehäuse derart orientiert sind, dass bei benachbarten Filterelementen die Bereiche größeren Querschnitts den Bereichen kleineren Querschnitts zugeordnet sind. In einer Gruppierung von Filterelementen sind bei den nebeneinanderliegenden, die Gruppierung bildenden Partnern somit schlankere Bereiche zu den dickeren Bereichen benachbarter Partner gegenüberliegend, so dass die Freiräume oder nicht genutzten "Toträume" innerhalb der Gruppierung minimierbar sind, d.h. eine entsprechend hohe Packungsdichte mit größtmöglicher Filterfläche realisierbar ist.

Die Filterelemente sind in Form konischer Filterkerzen mit einander entgegengesetzter Konizität zueinander benachbart angeordnet. In diesem Fall begrenzen die in einer Gruppe unmittelbar benachbart angeordneten Filterelemente trichterartige Fluidräume innerhalb des Filtergehäuses. Es ist aber auch möglich, konvexe Außengeometrien mit konkaven Strukturen sinnfällig zu kombinieren. Dergestalt lassen sich beispielsweise baumkuchenartige Filterelemente miteinander kombinieren, indem jeweils ein konvexer Baumkuchenring in eine konkave Ausnehmung zwischen zwei benachbart angeordneten konvexen Baumkuchenringen des anderen Filterelements, vorzugsweise unter Beibehalten eines radialen Abstandes, eingreift. Neben einer derart gestuften Ringanordnung sind aber auch kontinuierlich sich ändernde Strukturen denkbar, bei denen ein fassartiges Filterelement mit konvex vorragendem mittleren Fassteil in eine konkave Ausnehmung eines schlauchartig ausgebildeten, benachbarten Filterelementes mit Abstand eingreift, das insoweit ein Rotationshyperboloid ausbildet. Die genannten Abstände zwischen den Filterelementen sind für eine sinnfällige Fluidführung innerhalb des Filtergehäuses notwendig und alle derart gebildeten Filterelemente sind vorzugsweise rotationssymmetrisch ausgebildet.

Bei besonders vorteilhaften Ausführungsbeispielen sind die vorzugsweise jedoch durch konische Filterkerzen gebildeten Filterelemente im Filtergehäuse zwischen der ebenen Bodenplatte und einer in paralleler Ebene zu dieser liegenden Deckplatte angeordnet. Insoweit ist ein topfförmiges Filtergehäuse gebildet, in dem die Filterelemente über Befestigungen an der Bodenplatte aufgenommen sind. Ferner besteht ein axialer Abstand der Enden der Filterelemente zu der oberen Deckplatte.

Mit besonderem Vorteil kann hierbei die Bodenplatte als Anschlussplatte ausgebildet und mit Fluidöffnungen versehen sein, mit denen die Fluiddurchgänge in Fluidverbindung bringbar sind, die an den an der Bodenplatte gehaltenen Enden der Filterelemente in deren inneren Filterhohlraum führen.

Bei Filterkerzen mit einer rohrartigen Stützstruktur und einem Filtermedium, die den inneren Filterhohlraum umgeben, kann die Anordnung mit besonderem Vorteil so getroffen sein, dass die der Bodenplatte zugeordneten Enden der rohrartigen Stützstruktur die Fluiddurchgänge bilden und mit den Fluidöffnungen der Bodenplatte in Eingriff kommen, wenn sich das betreffende Filterelement in der Funktionsposition befindet.

Bei einer Bodenplatte, die als Anschlussplatte dient, kann an den der Deckplatte zugeordneten Enden der Filterkerzen deren innerer Filterhohlraum durch ein am Ende der rohrartigen Stützstruktur befindliches Verschlussstück fluiddicht geschlossen sein.

Hinsichtlich der Anschlussverbindung der mit dem schlankeren Ende der Bodenplatte zugewandten Filterkerzen kann die Anordnung mit Vorteil so getroffen sein, dass die rohrartige Stützstruktur durch ein Anschlussrohr verlängert ist, das in die betreffende Fluidöffnung eingreift und an der Bodenplatte axial gesichert ist.

Wenn Filterkerzen vorgesehen sind, die an der Außenseite eine äußere rohrartige Stützstruktur aufweisen, kann diese am dickeren Ende einen radial vorspringenden Ringrand bilden. Dieser kann bei den Filterkerzen, deren dickeres Ende der Bodenplatte zugeordnet ist, eine Anlagefläche an der Bodenplatte bilden.

Die innere Stützstruktur kann am schlankeren Ende ein Zylinderteil bilden, das einen hohlzylinderartigen Bund am schlanken Ende der äußeren Stützstruktur durchgreift, wobei der Bund an dem Zylinderteil axial gesichert ist. Nach Lösen dieser Sicherung kann die äußere Stützstruktur der Filterkerze abgezogen werden, um beispielsweise einen Austausch des Filtermediums durchzuführen.

In besonders vorteilhafter Weise kann der Bund eine Stufe aufweisen, die eine in einer Radialebene liegende Schulter bildet, die der Ringrand der äußeren Stützstruktur der jeweils benachbarten Filterkerze übergreift. Der Ringrand der äußeren Stützstruktur bildet somit ein Anschlagelement zur axialen Sicherung der Filterkerzen innerhalb der Gruppierung.

Für die Abstützung der Filterkerzen an der Deckplatte können am Bund der äußeren Stützstruktur und am geschlossenen dickeren Ende der inneren Stützstruktur jeweils Abstandhalter vorgesehen, vorzugsweise angeformt sein.

Es liegt auch noch im Bereich der Erfindung, Gruppen von Filterelementen mit unterschiedlichem Querschnitt mit solchen mit gleichem Querschnitt, beispielsweise in üblicher Zylinderbauart, innerhalb eines Filtergehäuses miteinander zu kombinieren.

Nachstehend ist die Erfindung anhand eines in der Zeichnung dargestellten Ausführungsbeispiels im Einzelnen erläutert. Es zeigen:
- Fig. 1: in der Art einer schematisch vereinfachten Funktionsskizze eine perspektivische Schrägansicht eines Teils der Bodenplatte des Filtergehäuses und einer Teilgruppe daran befindlicher Filterelemente eines Ausführungsbeispiels der erfindungsgemäßen Filtervorrichtung;
- Fig. 2: einen schematisch vereinfacht gezeichneten Längsschnitt lediglich einer Teilgruppe konischer Filterkerzen auf einem Teilabschnitt der Bodenplatte des Ausführungsbeispiels;
- Fig. 3: eine perspektivische Darstellung lediglich der äußeren Stützstruktur einer Filterkerze zur Benutzung beim Ausführungsbeispiel der Filtervorrichtung;
- Fig. 4: eine gegenüber Fig. 3 vergrößert gezeichnete perspektivische Schrägansicht lediglich des schlankeren Endes der äußeren Stützstruktur von Fig. 3;
- Fig. 5: eine gegenüber Fig. 2 vergrößert gezeichnete Schnittdarstellung lediglich des an die Bodenplatte angrenzenden Teils von Fig. 2;
- Fig. 6: eine entsprechend vergrößert gezeichnete Schnittdarstellung lediglich des an die nicht gezeigte Deckplatte angrenzenden Teilbereichs von Fig. 2; und

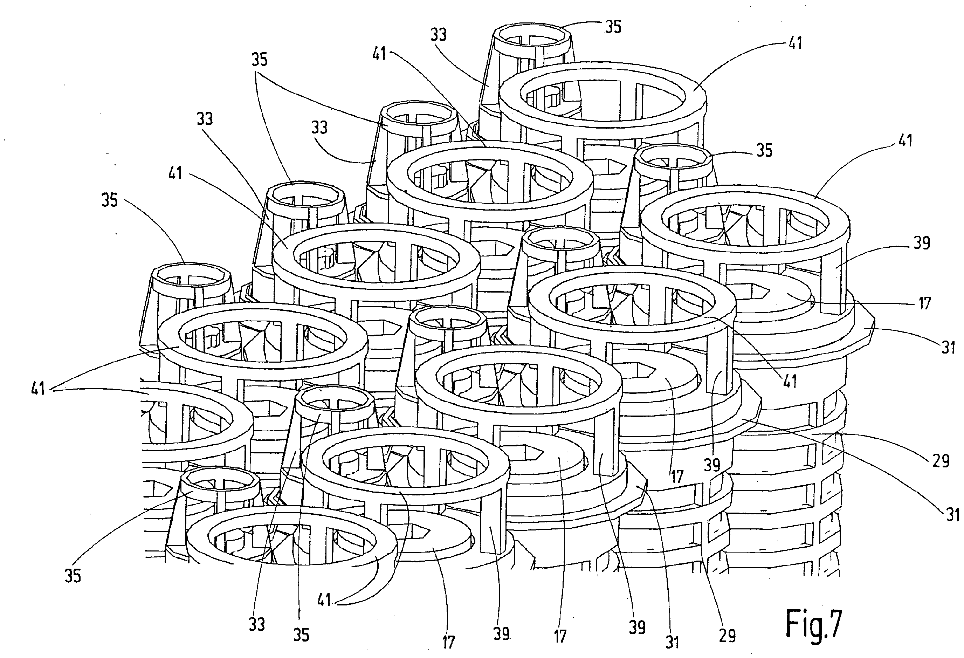

- Fig. 7: eine gegenüber Fig. 1 stark vergrößert gezeichnete perspektivische Schrägansicht lediglich des an die Deckplatte angrenzenden Bereichs eines Teils der in Fig. 1 gezeigten Gruppierung von Filterkerzen.

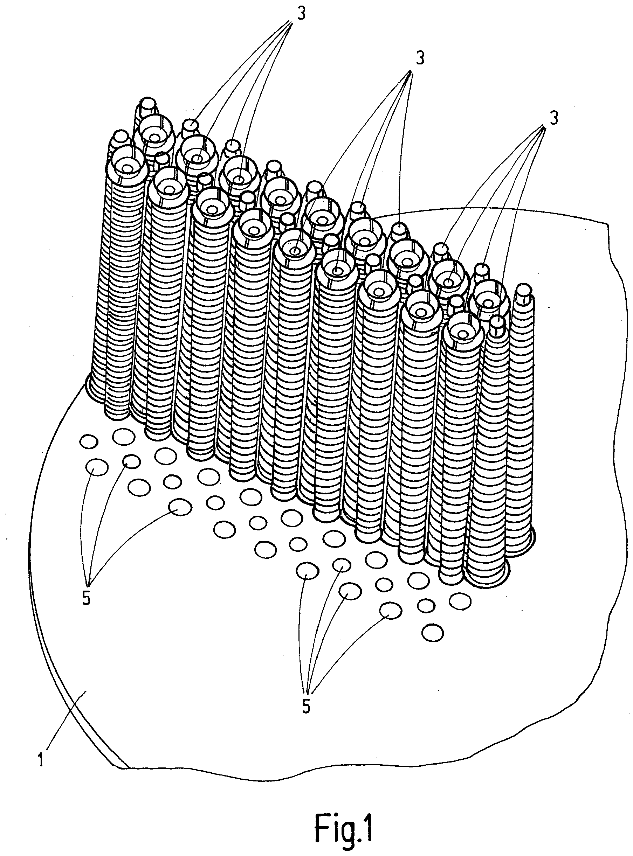

Von dem hier zu beschreibenden Ausführungsbeispiel der erfindungsgemä-βen Filtervorrichtung zeigt Fig. 1 lediglich einen Teilabschnitt der Bodenplatte 1 eines im Übrigen nicht dargestellten Filtergehäuses, das eine Mehrzahl Filterelemente in Form von konischen Filterkerzen 3 (in Fig. 1 nicht sämtliche beziffert) aufnimmt. Die Filterkerzen 3 sind, wie in Fig. 1 gezeigt, in dichter Packung nebeneinander gruppiert, wobei eine Reihenanordnung vorgesehen ist, bei der in jeweils einer Reihe die schlankeren Enden der Filterkerzen 3 der Bodenplatte 1 zugewandt sind und in der jeweils benachbarten Reihe die Filterkerzen 3 mit dem dickeren Ende der Bodenplatte 1 zugewandt sind und die Filterkerzen 3 aufeinanderfolgender Reihen jeweils so zueinander versetzt sind, dass die Filterkerzen 3 benachbarter Reihen jeweils "auf Lücke" stehen.

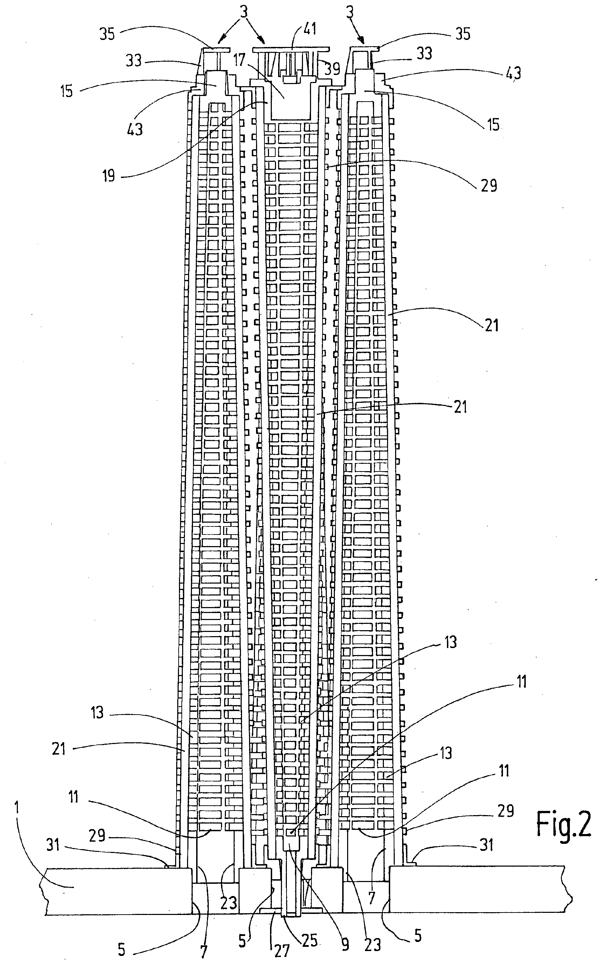

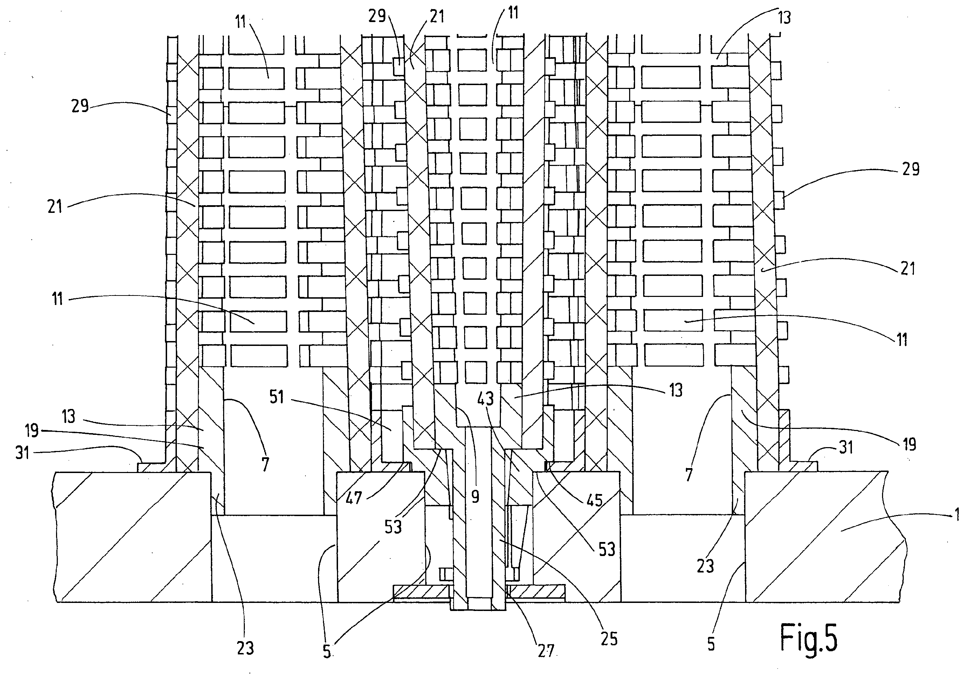

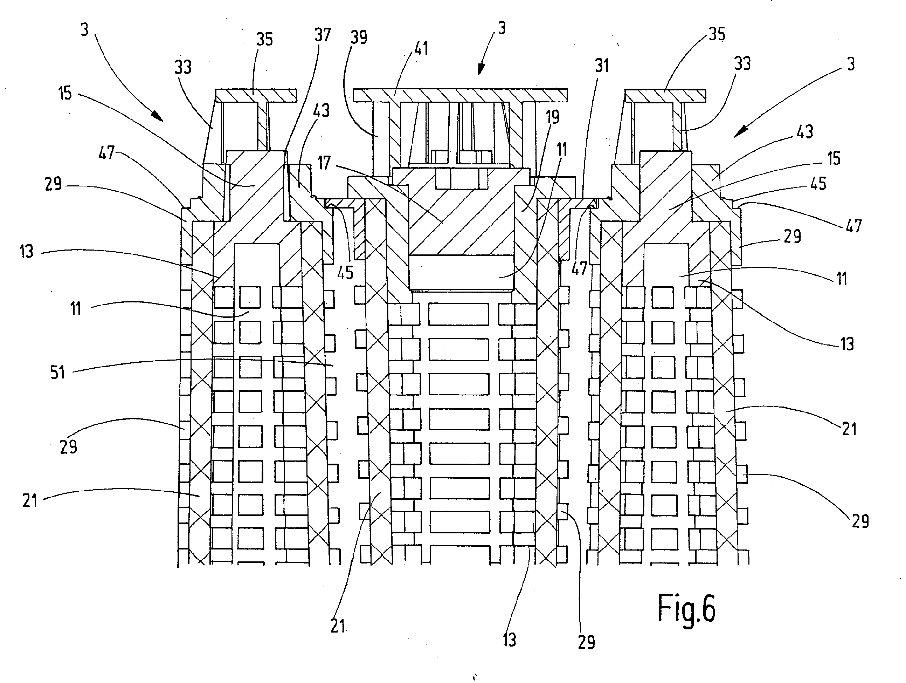

Von der Gesamtzahl der Filterkerzen 3 ist in Fig. 1 lediglich eine Teilgruppierung dargestellt. Auch sind vom Filtergehäuse die einen Hohlzylinder bildende Seitenwand und die der Bodenplatte 1 in paralleler Ebene gegenüberliegende Deckplatte weggelassen. Beim Filtriervorgang bildet der die Filterkerzen 3 umgebende Innenraum des Filtergehäuses die Rohseite 51 (Fig. 5 und 6), zu der abzureinigendes Fluid über einen entsprechenden Fluideingang des Filtergehäuses zuführbar ist. Die Bodenplatte 1 ist als Anschlussplatte ausgebildet und weist für jede Filterkerze 3 eine Fluidöffnung 5 (in Fig. 1 nicht sämtliche beziffert) auf. Die Filterkerzen 3 sind zwischen der Deckplatte und der Bodenplatte 1 derart gehalten oder eingespannt, dass Fluiddurchgänge 7 und 9, siehe Fig. 2 und 5, die sich am dickeren Ende bzw. dem schlankeren Ende der Filterkerzen 3 befinden, mit den Öffnungen 5 der Bodenplatte 1 in Fluidverbindung sind. Diese Fluiddurchgänge 7, 9 bilden den Ausgang aus dem jeweiligen inneren Filterhohlraum 11 der Filterkerzen 3, der beim Filtrationsvorgang die Reinseite bildet, so dass das abgereinigte Fluid über die Öffnungen 5 der Bodenplatte 1 aus dem Filtergehäuse abströmt.

Wie aus den Fig. 2, 3 und 6 deutlich entnehmbar ist, weisen die Filterkerzen 3 jeweils gleiche Konizität auf. Jedoch sind die Enden der Filterhohlräume 11 unterschiedlich gestaltet, je nachdem, ob die Filterkerzen 3 mit ihrem schlankeren Ende oder ihrem dickeren Ende an der Bodenplatte 1 in Fluidverbindung mit den Öffnungen 5 sind. Genauer gesagt, ist der Filterhohlraum 11, der mit den Durchgängen 7 und 9 am unteren Ende offen und mit den Öffnungen 5 der Bodenplatte 1 verbunden ist, an dem in der Zeichnung oben liegenden Ende jeweils geschlossen. Wie bei konischen Filterkerzen an sich bekannt, definiert eine rohrartige, innere Stützstruktur 13 den inneren Filterhohlraum 11. Wie Fig. 6 am deutlichsten zeigt, bildet bei den am schlankeren Ende geschlossenen Filterkerzen 3 ein Zylinderteil 15, das am Ende der Stützstruktur 13 angeformt ist, den Verschluss des Filterhohlraums 11. An dem dickeren, geschlossenen Ende bildet jedoch ein mit geschlossener Wandung ausgebildetes Endteil 19 der inneren Stützstruktur 13 mit eingeschraubtem Verschlussstopfen 17 das Verschlussstück des inneren Filterhohlraums 11.

Als Filtermedium, das sich an der Außenseite der inneren Stützstruktur 13 befindet, kann eine Filtermatte 21, etwa in Form eines Filtervlieses, wie Polyestervlies od. dgl., vorgesehen sein, das um die Stützstruktur 13 herumgelegt ist, oder es kann sich um einen Faserauftrag handeln, der auf die Stützstruktur 13 unmittelbar durch ein Melt-Blown-Verfahren aufgetragen ist. Es versteht sich, dass die Art und Spezifikation des jeweiligen Filtermediums 21 vom Einsatzzweck und den Arbeitsbedingungen der Filtervorrichtung abhängig ist.

An dem der Bodenplatte 1 zugeordneten Ende bildet die innere Stützstruktur 13 mit geschlossenem Endteil 19 einen Anschlussstutzen 23 für den Eingriff in die betreffende Öffnung 5 der Bodenplatte 1. Die mit dem schlankeren Ende der Bodenplatte 1 zugewandten Filterkerzen 3 weisen anstelle des als Verschlussstück dienenden Zylinderteils 15 ein an die innere Stützstruktur 13 angeformtes Anschlussrohr 25 auf, das die betreffende Öffnung 5 durchgreift. Das Rohr 25, und damit die Filterkerze 3, ist in der Öffnung 5 axial gesichert. Beim vorliegenden Beispiel ist hierfür ein Bajonettverschluss 27 vorgesehen. Alternativ könnte zur Sicherung eine Schraubverbindung oder ein Clip vorgesehen sein.

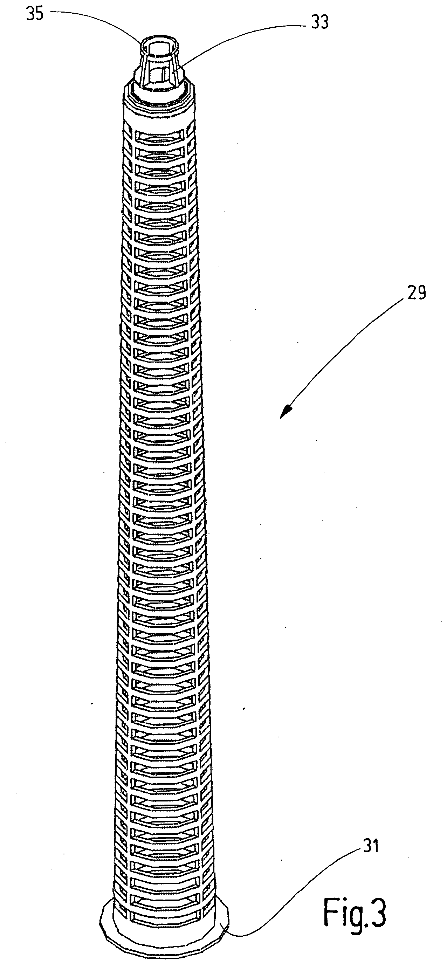

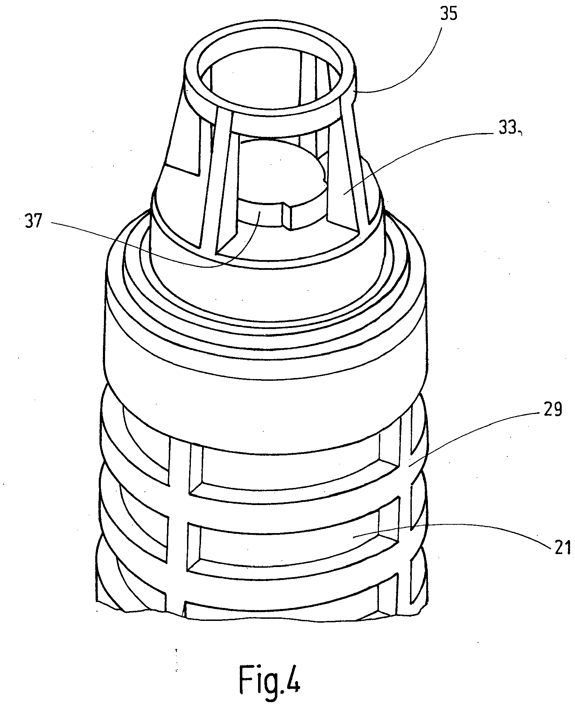

Beim vorliegenden Beispiel weisen die Filterkerzen 3 eine die Außenseite des Filtermediums 21 umgebende, äußere, rohrartige Stützstruktur 29 auf, die in Fig. 3 gesondert dargestellt ist. Die äußere Stützstruktur 29 ist, wie die innere Stützstruktur 13, eine Art Gitterstruktur, vorzugsweise aus einem Kunststoffwerkstoff einstückig pressgeformt und ist an den von der Gitterstruktur freigelassenen Öffnungen von einem Fluid durchströmbar. Am dickeren Ende bildet die Stützstruktur 29 einen radial vorspringenden Ringrand 31 aus, der im Einbauzustand an der Bodenplatte 1 anliegt. Am gegenüberliegenden, geschlossenen Ende ist an der Stützstruktur 29 ein Entnahmeteil 33 angeformt, der einen Entnahmering 35 zur Entnahme des Filterelementes aus dem Filtergehäuse von Hand zeigt. Die äußere Stützstruktur 29 ist über eine nur in Fig. 4 angedeutete Bajonettsicherung 37 mit dem Zylinderteil 15 verbunden. Nach Lösen des Bajonetts 37 kann die äußere Stützstruktur 29 abgezogen und entnommen werden. In Entsprechung zu dem Entnahmeteil 33 der jeweils geschlossenen Enden der Filterkerzen 3 befinden sich am dickeren, geschlossenen Ende Entnahmeteile 39 mit Entnahmeringen 41, die den Entnahmeringen 35 der schlankeren Enden entsprechen.

Für den gegenseitigen, axialen Zusammenhalt der Gruppierung der Filterkerzen 3 bilden die Ringränder 31 an der äußeren Stützstruktur 29 eine Art Verzahnung mit den schlankeren Enden der äußeren Stützstruktur 29 benachbarter Filterkerzen 3. Genauer gesagt, siehe insbesondere Fig. 6, weisen die äußeren Stützstrukturen 29 endseitig einen eine Art Hohlzylinder bildenden Bund 43 auf, der vom Zylinderteil 15 der inneren Stützstruktur 13 durchgriffen ist. Dieser Bund 43 bildet eine umfängliche Stufe 45, die eine in einer Radialebene liegende Schulterfläche 47 bildet, die den Ringrand 31 des dickeren Endes der äußeren Stützstruktur 29 der benachbarten Filterkerze 3 übergreift, siehe insbesondere Fig. 5 und 6.

Bei dem so durch die Bodenplatte 1 gebildeten Zusammenhalt der Gruppierung der Filterkerzen 3 erfolgt die Abdichtung zwischen der beim Filtervorgang gebildeten Rohseite 51 und der im Filterhohlraum 11 befindlichen Reinseite mittels Dichtkanten 53, die, wie in Fig. 5 angedeutet ist, am Bund 43 der inneren Stützstruktur 13 gebildet sind. Ferner besteht die Möglichkeit, die Filterkerzen 3 rückzuspülen, indem man den Fluidstrom von der Reinseite 11 in Richtung der Rohseite 51 umkehrt.

Während vorstehend konische Filterkerzen 3 in mehrteiliger Bauart mit Stützstrukturen 13, 29 und dazwischen angeordnetem Filtermedium 21 beschrieben sind, könnten Filterkerzen in Form konischer Spaltsiebrohrelemente vorgesehen sein, die in entsprechender Gruppierung mit zueinander umgekehrter Konizität vergleichbar angeordnet wären.

## Patentansprüche

1. Filtervorrichtung mit mehreren Filterelementen (3), deren Körper jeweils eine Längsachse definieren, wobei die Filterelemente (3) in einem Gehäuse mit zueinander parallel verlaufenden Längsachsen nebeneinander angeordnet sind und die Körper mindestens eines Teils der Filterelemente (3) auf zumindest einem Teil ihrer Länge eine von einem Kreiszylinder abweichende Form besitzen, wobei die Filterelemente (3) mit von der Kreiszylinderform abweichenden Körpern einen Querschnitt besitzen, dessen Größe sich von einem Ende zum anderen Ende hin zumindest teilweise ändert, wobei diese Filterelemente im Gehäuse derart orientiert sind, dass bei benachbarten Filterelementen die Bereiche größeren Querschnitts den Bereichen kleineren Querschnitts zugeordnet sind, wobei Filterelemente in Form konischer Filterkerzen (3) mit einander entgegengesetzter Konizität zueinander benachbart angeordnet sind, wobei die Filterkerzen (3) in dichter Packung nebeneinander gruppiert sind und wobei eine Reihenanordnung vorgesehen ist, bei der in jeweils einer Reihe die schlankeren Enden der Filterkerzen (3) einer Bodenplatte (1) zugewandt sind und in der jeweils benachbarten Reihe die Filterkerzen (3) mit dem dickeren Ende der Bodenplatte (1) zugewandt sind, wobei die Bodenplatte (1) als Anschlussplatte ausgebildet ist, **dadurch gekennzeichnet, dass** die Filterkerzen (3) aufeinanderfolgender Reihen jeweils so zueinander versetzt sind, dass die Filterkerzen (3) benachbarter Reihen jeweils auf Lücke stehen, und dass die Bodenplatte (1) für jede Filterkerze (3) eine Fluidöffnung (5) aufweist.

2. Filtervorrichtung nach Anspruch 1, **dadurch gekennzeichnet, dass** die durch konische Filterkerzen (3) gebildeten Filterelemente im Filtergehäuse zwischen der ebenen Bodenplatte (1) und einer in paralleler Ebene zu dieser liegenden Deckplatte angeordnet sind.

3. Filtervorrichtung nach einem der vorstehenden Ansprüche, **dadurch gekennzeichnet, dass** die Bodenplatte (1) als Anschlussplatte ausgebildet und mit den Fluidöffnungen (5) versehen ist, mit denen Fluiddurchgänge (7, 9) in Fluidverbindung bringbar sind, die an den an der Bodenplatte (1) gehaltenen Enden der Filterelemente (3) in deren inneren Filterhohlraum führen.

4. Filtervorrichtung nach einem der vorstehenden Ansprüche, **dadurch gekennzeichnet, dass** Filterkerzen (3) mit einer rohrartigen inneren Stützstruktur (13) und einem Filtermedium (21), die den inneren Filterhohlraum (11) umgeben, vorgesehen sind, und dass die der Bodenplatte (1) zugeordneten Enden der rohrartigen Stützstruktur (13) die Fluiddurchgänge (7, 9) bilden und mit den Fluidöffnungen (5) der Bodenplatte (1) in Eingriff kommen.

5. Filtervorrichtung nach Anspruch 4, **dadurch gekennzeichnet, dass** an den der Deckplatte zugeordneten Enden der Filterkerzen (3) deren innerer Filterhohlraum (11) durch ein am Ende (19) der rohrartigen Stützstruktur (13) befindliches Verschlussstück (15, 17) geschlossen ist.

6. Filtervorrichtung nach Anspruch 4 oder 5, **dadurch gekennzeichnet, dass** bei den mit ihrem schlanken Ende der Bodenplatte (1) zugeordneten Filterkerzen (3) die rohrartige Stützstruktur (13) durch ein Anschlussrohr (25) verlängert ist, das in die betreffende Fluidöffnung (5) eingreift und an der Bodenplatte (1) axial gesichert ist.

7. Filtervorrichtung nach einem der vorstehenden Ansprüche, **dadurch gekennzeichnet, dass** die Filterkerzen (3) an der Außenseite eine äußere rohrartige Stützstruktur (29) aufweisen, die am dickeren Ende einen radial vorspringenden Ringrand (31) bildet.

8. Filtervorrichtung nach Anspruch 7, **dadurch gekennzeichnet, dass** die innere Stützstruktur (13) am schlankeren Ende ein Zylinderteil (15) bildet, das einen hohlzylinderartigen Bund (43) am schlanken Ende der äußeren Stützstruktur (29) durchgreift, die an dem Zylinderteil (15) lösbar axial gesichert ist.

9. Filtervorrichtung nach Anspruch 8, **dadurch gekennzeichnet, dass** der Bund (43) eine Stufe (45) aufweist, die eine in einer Radialebene liegende Schulter (47) bildet, die der Ringrand (31) der äußeren Stützstruktur (29) der jeweils benachbarten Filterkerze (3) übergreift.

10. Filtervorrichtung nach Anspruch 8 oder 9, **dadurch gekennzeichnet, dass** am Bund (43) der äußeren Stützstruktur (29) ein axial vorspringendes Entnahmeteil (33, 35) für die Entnahme des jeweiligen Filterelementes aus dem Filtergehäuse angeformt ist.

11. Filtervorrichtung nach einem der Ansprüche 4 bis 11, **dadurch gekennzeichnet, dass** am geschlossenen, dickeren Ende der inneren Stützstruktur (13) ein axial vorspringendes Entnahmeteil (39, 41) für die Entnahme des jeweiligen Filterelementes aus dem Filtergehäuse vorgesehen ist.

## Claims

1. A filtering device with a plurality of filtering elements (3), the bodies of which each define a longitudinal axis, wherein the filtering elements (3) are arranged adjacent to one another in a housing with longitudinal axes running parallel to one another, and the bodies at least of a part of the filtering elements (3) have a shape deviating from a circular cylinder in at least one part of the length thereof, wherein the filtering elements (3) with bodies deviating from a circular cylinder shape have a cross-section the size of which changes at least partially from one end to the other end, wherein these filtering elements are oriented inside the housing such that the areas of larger cross-sections are allocated to areas of smaller cross-sections in adjacent filtering elements, wherein filtering elements in the shape of tapered candle filters (3) are arranged adjacent to each other with respectively opposite tapering, wherein the candle filters (3) are grouped next to one another in tightly packed manner and wherein an in-line configuration is provided, with the more slender ends of the candle filters (3) each facing a base plate (1) in line and in the respectively adjacent row the candle filters face the base plate (1) with the thicker end thereof, wherein the base plate (1) is designed as connection plate, **characterised in that** the candle filters (3) of consecutive rows are offset to one another such that the candle filters (3) each stand on gaps, and that the base plate (1) has a fluid opening (5) for each candle filter (3).

2. The filtering device according to claim 1, **characterised in that** the filtering elements formed by tapered candle filters (3), are arranged in the filter housing between the planar base plate (1) and a cover plate arranged in a plane parallel thereto.

3. The filtering device according to one of the preceding claims, **characterised in that** the base plate (1) is designed as connection plate and is provided with the fluid openings (5) with which fluid passages (7,9) can be brought into fluid connection, which passages lead, at the ends of the filtering elements (3) held on the base plate (1), to the internal filter cavity thereof.

4. The filtering device according to one of the preceding claims, **characterised in that** candle filters (3) are provided with a tube-like internal support structure (13) and a filter medium (21) which surround the internal filter cavity (11), and that the ends of the tube-like support structure (13) allocated to the base plate (1) form the fluid passages (7, 9) and engage with the fluid openings (5) of the base plate (1).

5. The filtering device according to claim 4, **characterised in that**, at the ends of the candle filters (3) allocated to the cover plate, the internal filter cavity (11) of the filtering device is closed by a closure piece (15, 17) located at the end (19) of the tube-like support structure (13).

6. The filtering device according to claim 4 or 5, **characterised in that**, on the candle filters (3) which are allocated to the base plate (1) at the slender ends thereof, the tube-like support structure (13) is extended by a connection tube (25) which engages in the corresponding fluid opening (5) and is axially attached to the base plate (1).

7. The filtering device according to one of the preceding claims, **characterised in that** the candle filters (3) have, on the outer side thereof, an external tube-like support structure (29) which forms a radially protruding annular edge (31) on the thicker end.

8. The filtering device according to claim 7, **characterised in that** the internal support structure (13) forms a cylinder part (15) on the more slender end thereof which reaches through a hollow cylindrical collar (43) on the slender end of the external support structure (29) which is detachably axially secured to the cylinder part (15).

9. The filtering device according to claim 8, **characterised in that** the collar (43) includes a step (45) which forms a shoulder (47) lying in the radial plane, which shoulder grips over the annular edge (31) of the external support structure (29) of the respectively adjacent candle filter (3).

10. The filtering device according to claim 8 or 9, **characterised in that** an axially protruding removal part (33, 35) is formed in one piece at the collar (43) of the external support structure (29) for removing the respective filter element from the filter housing.

11. The filtering device according to one of claims 4 to 11, **characterised in that** an axially protruding removal part (39, 41) is provided on the closed, thicker end of the internal support structure (13) for removing the respective filtering element from the filter housing.

## Revendications

1. Dispositif de filtration comprenant plusieurs éléments (3) de filtre, dont les corps définissent chacun un axe longitudinal, les éléments (3) de filtre étant disposés dans une enveloppe les uns à côté des autres, en ayant leurs axes longitudinaux s'étendant parallèlement entre eux, et les corps d'au moins une partie des éléments (3) de filtre possédant, sur au moins une partie de leur longueur, une forme s'écartant d'un cylindre de section circulaire, dans lequel les éléments (3) de filtre, ayant des corps s'écartant de la forme d'un cylindre de section circulaire, ont une section transversale, dont la grandeur se modifie, au moins en partie, d'une extrémité à l'autre, ces éléments de filtre étant orientés dans l'enveloppe, de manière à ce que, pour des éléments de filtre voisins, les régions de section transversale plus grande soient associées aux régions de section transversale plus petite, des éléments de filtre sous la forme de bougies (3) de filtre coniques de conicité opposée l'une à l'autre étant disposées au voisinage l'une de l'autre, les bougies (3) de filtre étant regroupées les unes à côté des autres suivant un tassement serré et il est prévu un agencement par rangée, dans lequel, dans respectivement une rangée, les extrémités les plus fines des bougies (3) de filtre sont tournées vers une plaque (1) de fond et, dans la rangée voisine respectivement, les bougies (3) de filtre sont tournées par l'extrémité plus épaisse vers la plaque (1) de fond, la plaque (1) de fond étant constituée sous la forme d'une plaque de raccordement, **caractérisé en ce que** les bougies (3) de filtre de rangées successives sont décalées chacune les unes par rapport aux autres, de manière à ce que les bougies (3) de filtre de rangées voisines se trouvent respectivement sur des lacunes, et **en ce que** la plaque (1) de fond a une ouverture (5) pour du fluide pour chaque bougie (3) de filtre.

2. Dispositif de filtration suivant la revendication 1, **caractérisé en ce que** les éléments de filtre formés par des bougies (3) de filtre conique sont disposés dans l'enveloppe de filtre entre la plaque (1) de fond plane et une plaque de couverture, se trouvant dans un plan parallèle à celle-ci.

3. Dispositif de filtration suivant l'une des revendications précédentes, **caractérisé en ce que** la plaque (1) de fond est constituée en plaque de raccordement et est pourvue d'ouvertures (5) pour du fluide, avec lesquelles peuvent être mis en liaison fluidique des passages (7, 9) pour du fluide, qui mènent aux extrémités, maintenues dans la plaque (1) de fond, des éléments (3) de filtre à leurs cavités intérieures de filtre.

4. Dispositif de filtration suivant l'une des revendications précédentes, **caractérisé en ce qu'**il est prévu des bougies (3) de filtre ayant une structure (13) intérieure tubulaire d'appui et un milieu (21) filtrant, qui entoure la cavité (11) intérieure de filtre, et **en ce que** les extrémités, associées à la plaque de fond, de la structure (13) tubulaire d'appui forment les passages (7, 9) pour du fluide et viennent en prise avec les ouvertures (5) pour du fluide de la plaque (1) de fond.

5. Dispositif de filtration suivant la revendication 4, **caractérisé en ce que**, aux extrémités, tournées vers la plaque de recouvrement, des bougies (3) de filtre, leurs cavités (11) intérieures de filtre sont fermées par une pièce (15, 17) de fermeture, se trouvant à l'extrémité (19) de la structure (13) tubulaire d'appui.

6. Dispositif de filtration suivant la revendication 4 ou 5, **caractérisé en ce que**, pour les bougies (3) de filtre associées par leurs extrémités fines à la plaque (1) de fond, la structure (13) tubulaire d'appui est prolongée par un tube (25) de raccordement, qui pénètre dans l'ouverture (5) pour du fluide concerné et est fixé axialement à la plaque (1) de fond.

7. Dispositif de filtration suivant l'une des revendications précédentes, **caractérisé en ce que** les bougies (3) de filtre ont, du côté extérieur, une structure (29) extérieure tubulaire d'appui, qui forme, à l'extrémité plus épaisse, un bord (31) annulaire en saillie radialement.

8. Dispositif de filtration suivant la revendication 7, **caractérisé en ce que** la structure (13) intérieure d'appui forme, à l'extrémité plus fine, une partie (15) de cylindre, qui passe dans un collet (43) de type en cylindre creux à l'extrémité fine de la structure (29) extérieure d'appui fixée axialement de manière détachable à la partie (15) de cylindre.

9. Dispositif de filtration suivant la revendication 8, **caractérisé en ce que** le collet (43) a un gradin (45), qui forme un épaulement (47) se trouvant dans un plan radial et chevauchant le bord (31) annulaire de la structure (29) extérieure d'appui de la bougie (3) de filtre voisine respectivement.

10. Dispositif de filtration suivant la revendication 8 ou 9, **caractérisé en ce que**, sur le collet (43) de la structure (29) extérieure d'appui, est formée une partie (33, 35) de prélèvement en saillie axialement pour prélever l'élément de filtre respectif de l'enveloppe de filtre.

11. Dispositif de filtration suivant l'une des revendications 4 à 11, **caractérisé en ce que**, à l'extrémité fermée plus épaisse de la structure (13) intérieure d'appui, est prévue une partie (39, 41) de prélèvement en saillie axialement pour prélever l'élément de filtre respectif de l'enveloppe de filtre.
